# EUROPEAN PATENT APPLICATION

(11) **EP 4 786 687 A1**
(43) Date of publication of application: **05.08.2026**
(21) Application number: 24871869.4
(22) Date of filing: 11.09.2024
(51) Int. Cl.: E02F 9/00

(54) **POWER CONTROL SYSTEM AND POWER CONTROL METHOD**

(30) Priority: 29.09.2023 JP 2023170975
(71) Applicant: Hitachi Construction Machinery Co., Ltd., Tokyo 110-0015 (JP)
(72) Inventor: ONO, Kuniyuki, Tsuchiura-shi, Ibaraki 300-0013 (JP); NIIDOME, Takashi, Tsuchiura-shi, Ibaraki 300-0013 (JP); TSUMURA, Hiroshi, Tsuchiura-shi, Ibaraki 300-0013 (JP); KURAMOCHI, Kazuyoshi, Tsuchiura-shi, Ibaraki 300-0013 (JP); HOTTA, Kaito, Tsuchiura-shi, Ibaraki 300-0013 (JP); TOKIYOSHI, Ryo, Tsuchiura-shi, Ibaraki 300-0013 (JP)
(74) Representative: MERH-IP Matias Erny Reichl Hoffmann Patentanwälte PartG mbB
(86) International application number: PCT/JP2024/032589
(87) International publication number: WO 2025/070072

(57) **Abstract**

A power control system 1 is provided, which includes: a surrounding camera 510 for detecting an object in a periphery of a power cable 200 which supplies electric power to an electric shovel 100 operated by the electric power and an object detection computation-unit 520 which limits the electric power to be supplied to the electric shovel 100, when a distance between the object detected by the surrounding camera 510 and the power cable 200 falls within a range determined in advance. As a result, a power control system and a power control method which can suppress contact of the object with the power cable and allow the working machine to be operated more safely can be provided.

## Description

### [Technical Field]

The present invention relates to a power control system and a power control method. The present invention relates particularly to a power control system and a power control method which can be preferably used when electric power supplied by a power cable particularly to a working machine is to be controlled.

### [Background Art]

Recently, from an environmentally-conscious viewpoint, a working machine operated by electric power has begun to be used. As a method of supplying electric power to the working machine, there is, for instance, a method in which a power cable is coupled to a working machine, and electric power obtained from a system power-source or the like is supplied to the working machine via the power cable.

PTL 1 discloses that, by wiring a high-voltage cable for connecting electric driving means, driven by electric power from power generating means for generating power by driving of an engine or power storage means for storing electric power generated by the power generating means, and the power storage means to each other and for supplying the electric power along a side surface of a frame structural member protruding in a vertical direction, the high-voltage cable is preferably protected by the frame structural member serving as a rising wall, and even in such a case that a construction machine collides against an obstacle or the like, for example, the high-voltage cable is preferably protected by the frame structural member.

### [Citation List]

### [Patent Literature]

[PTL 1] Japanese Patent Application Publication No. 2011-122307

### [Summary of Invention]

### [Technical Problem]

However, for instance in a case where a working machine is a construction machine, for example, at a construction site where the construction machine is being operated, there is a possibility that an operator or an object such as equipment at a construction site or a working machine itself, to which the power cable is coupled, is brought into contact with the coupled power cable and causes damage or cutting of the cable. As a result, there is a concern that a fire or an electric shock may occur.

The present invention has an object to provide a power control system, and a power control method which can suppress contact of an object with the power cable and allows a working machine to be operated more safely.

### [Solution to Problem]

In order to solve the above-described problem, the present invention is a power control system including:
a first detecting device for detecting an object in a periphery of a power cable which supplies electric power to a working machine operated by electric power and a controller for limiting the electric power to be supplied to the working machine, when a distance between an object detected by the first detecting device and the power cable falls within a range determined in advance. In this case, a power control system which can suppress contact of an object with the power cable and allows a working machine to be operated more safely can be provided.

Here, the power cable is coupled to the working machine and a cable container which brings the power cable into a straight-line state by winding the power cable so that the electric power is supplied to the working machine via the cable container. In this case, the power cable for a length corresponding to a surplus can be accommodated in the cable container.

In addition, the range determined in advance can be made to have a predetermined width which clamps the straight-line state power cable. In this case, a more suitable range can be set as a detection range.

Moreover, a second detecting device for detecting a position of the working machine and a position of the cable container is provided, and the controller can estimate a straight line, coupling the position of the working machine and the position of the cable container, which are detected by the second detecting device, as the position of the power cable and set a range determined in advance on the basis of the position of this power cable. In this case, detection of the power cable is more facilitated.

Furthermore, the first detecting device is a camera disposed capable of imaging the power cable, the power cable including on an outer surface thereof a detecting material, and the controller can set the position of the detecting material imaged by the camera as the position of the power cable. In this case, the position of the power cable can be determined on the basis of the photographed image.

In addition, a vehicle controller mounted on the working machine and operating, when the electric power to be supplied to the working machine by the power cable is limited, the working machine by electric power supplied from a battery provided in the working machine can be provided. In this case, falling or the like of the working machine can be prevented.

Moreover, a vehicle controller mounted on the working machine and executing, when the electric power to be supplied to the working machine by the power cable is limited, operation limitation control for limiting an operation of the working machine can be provided. In this case, contact with an object getting close to the power cable can be prevented.

Furthermore, the operation limitation control can be made such control that limits an operation of a working machine within a range determined in advance. In this case, safety is improved.

In addition, the operation limitation control can be made such control that gradually slows the operation of a working machine and stops it. In this case, falling or the like of the working machine can be prevented.

Moreover, a notifying device for giving notification can be further provided so that, when a distance between the object detected by the first detecting device and the power cable falls within a range determined in advance, the controller can implement notification by the notifying device. In this case, the fact that the object has become closer can be notified to a worker in the periphery or the like.

Furthermore, the notifying device can give notification by at least either one of light and sound. In this case, the notification can be given effectively.

And the notifying device can be a mobile display terminal which displays to the effect that there is an object in the periphery of the power cable. In this case, the notification can be given even when a workier is located remotely.

In addition, the present invention is a power control method including, by the processor executing a program recorded in a memory, detecting an object in a periphery of the power cable for supplying, to the working machine operated by electric power, the electric power, and limiting, when a distance between the detected object and the power cable falls within a range determined in advance, the electric power to be supplied to the working machine. In this case, the power control method which can suppress contact of the object with the power cable and allow the working machine to be operated more safely can be provided.

### [Advantageous Effects of Invention]

According to the present invention, a power control system, a power control method which can suppress contract of an object with a power cable and allow a working machine to be operated more safely can be provided.

### [Brief Description of Drawings]

[Fig. 1]

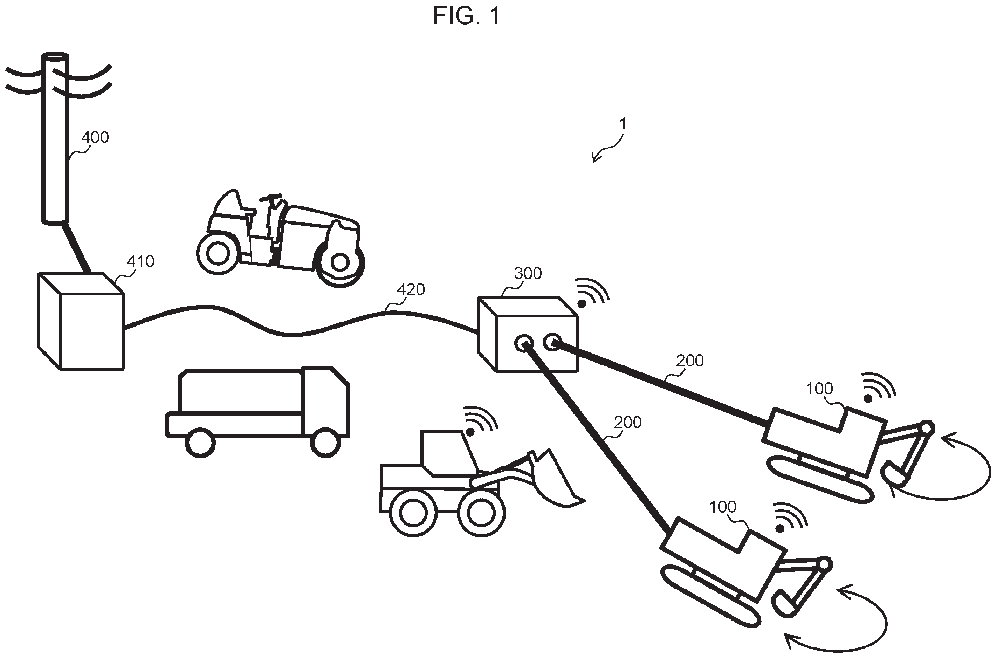

   Fig. 1 is a diagram illustrating an entire constitution of a work site to which this Embodiment is applied.
[Fig. 2]

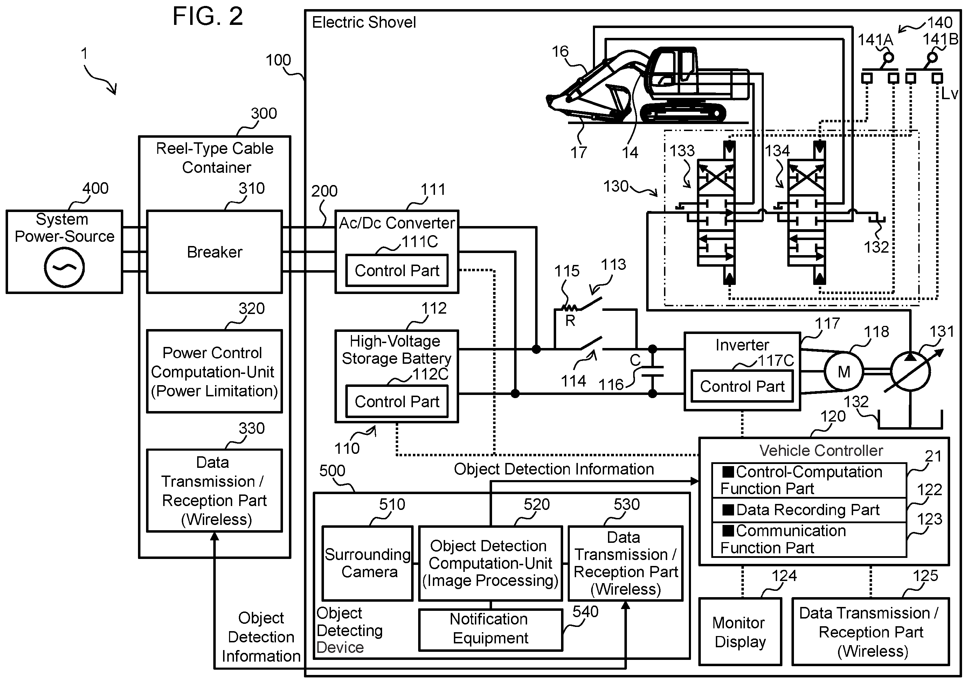

   Fig. 2 is a block diagram illustrating a power control system when an object detecting device is mounted on an electric shovel.
[Fig. 3]

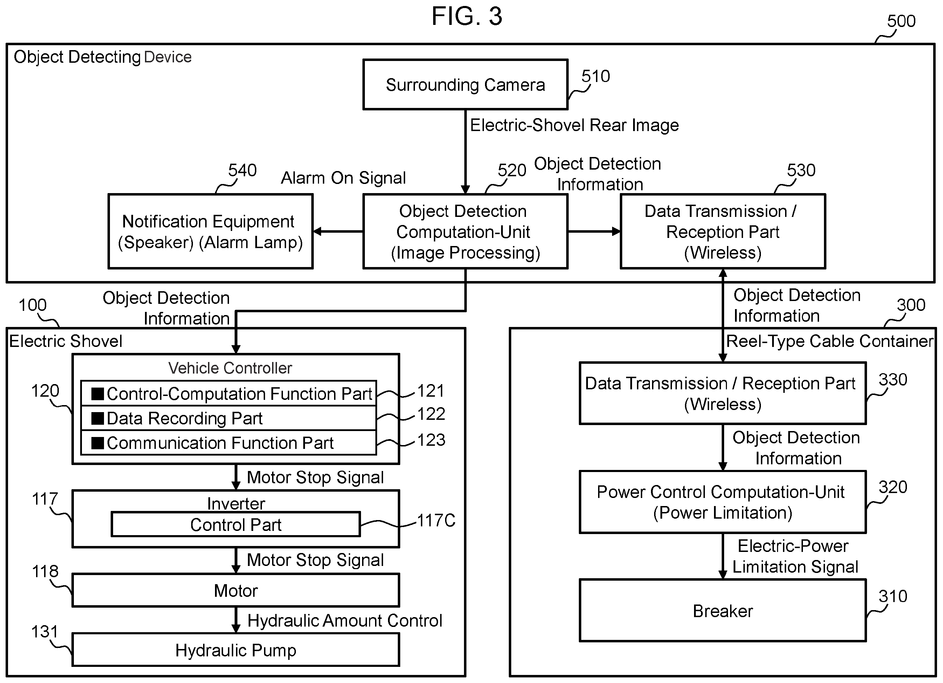

   Fig. 3 is a diagram illustrating an exchange of information when the object detecting device is mounted on the electric shovel.
[Fig. 4]

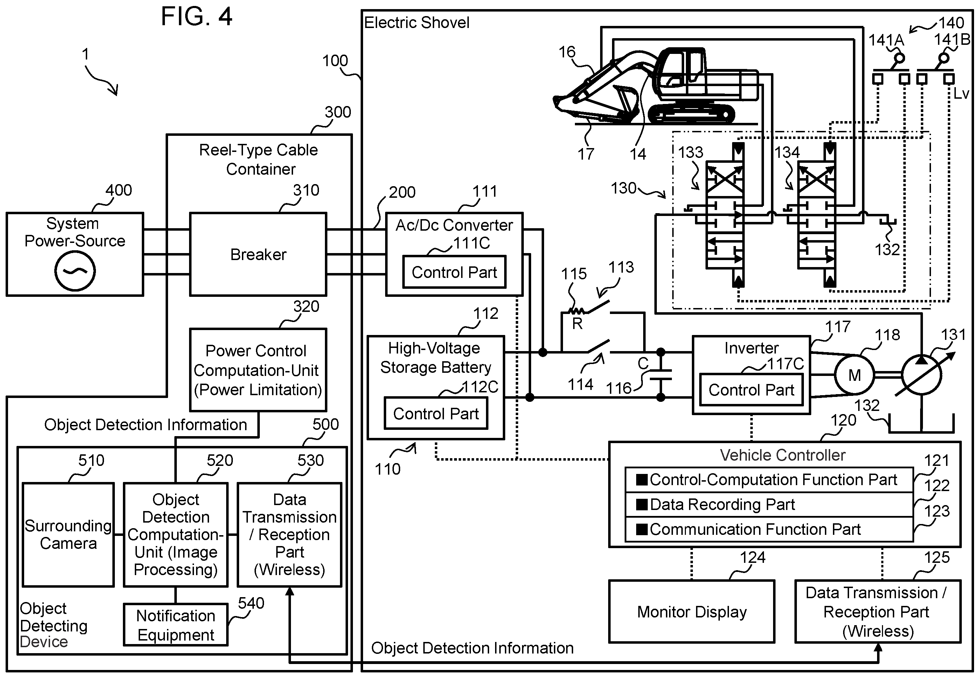

   Fig. 4 is a block diagram illustrating a power control system 1 when the object detecting device is mounted on a reel-type cable container.
[Fig. 5]

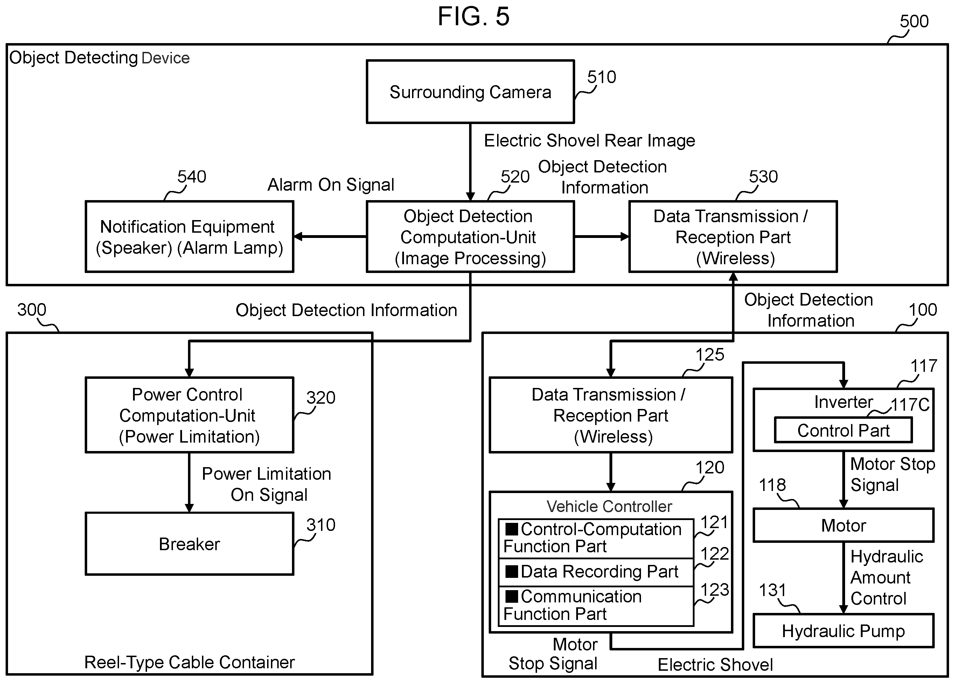

   Fig. 5 is a diagram illustrating exchange of information when the object detecting device is mounted on the reel-type cable container.
[Fig. 6A]

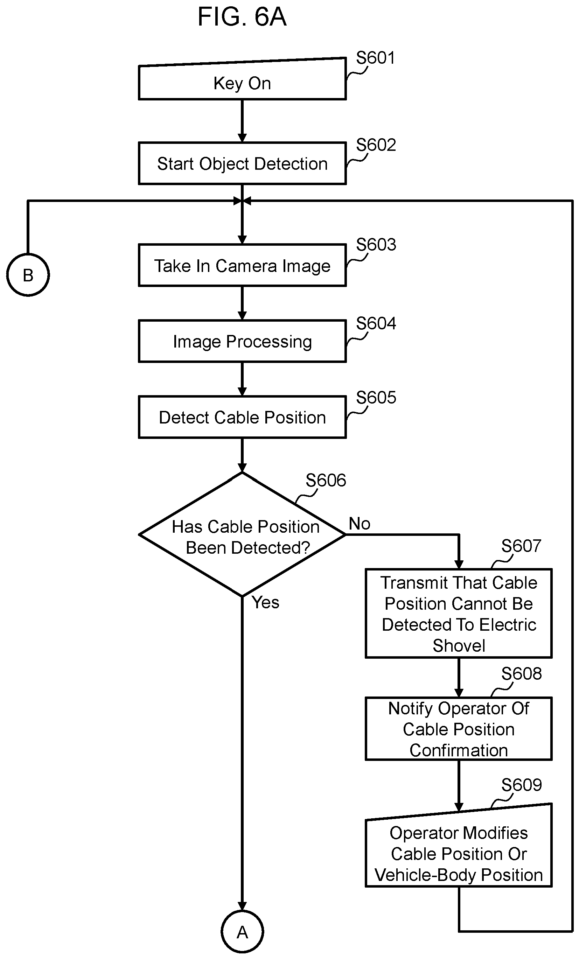

   Fig. 6A is a flowchart illustrating processing executed by the power control system.
[Fig. 6B]

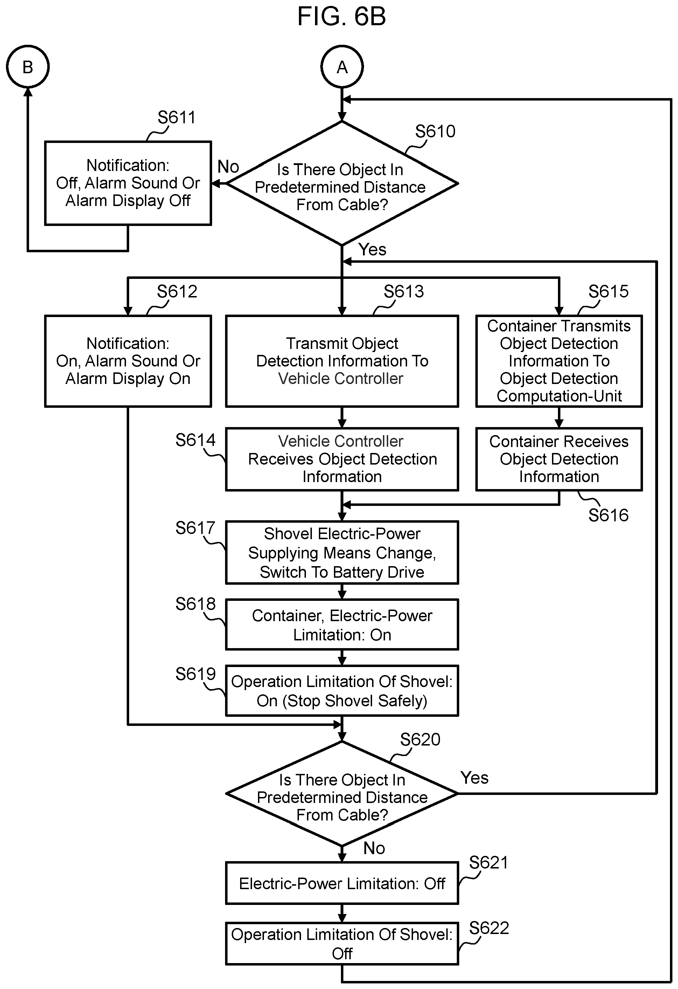

   Fig. 6B is a flowchart illustrating processing executed by the power control system.
[Fig. 7]

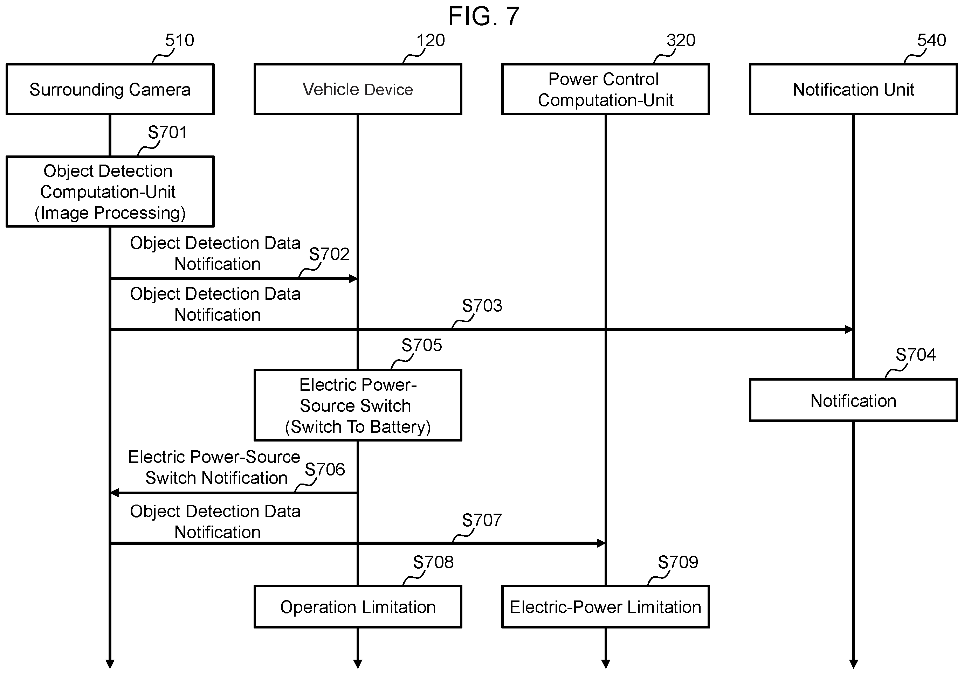

   Fig. 7 is a sequence diagram illustrating operations and exchange of information among a surrounding camera, a vehicle controller, a power control computation-unit, notification equipment.
[Fig. 8]

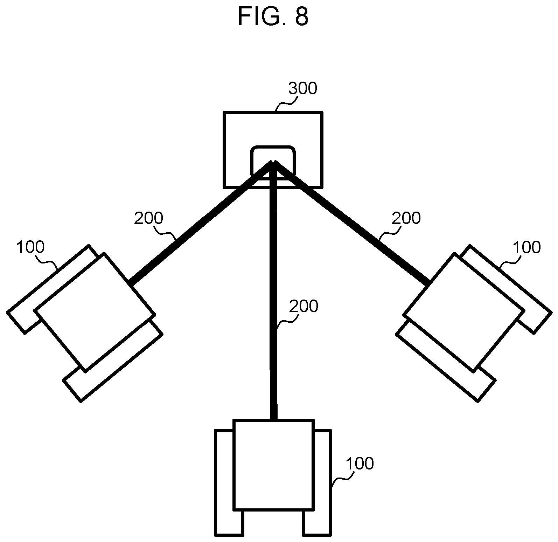

   Fig. 8 is a diagram illustrating a positional relation among the electric shovel, the reel-type cable container, and the power cable.
[Fig. 9]

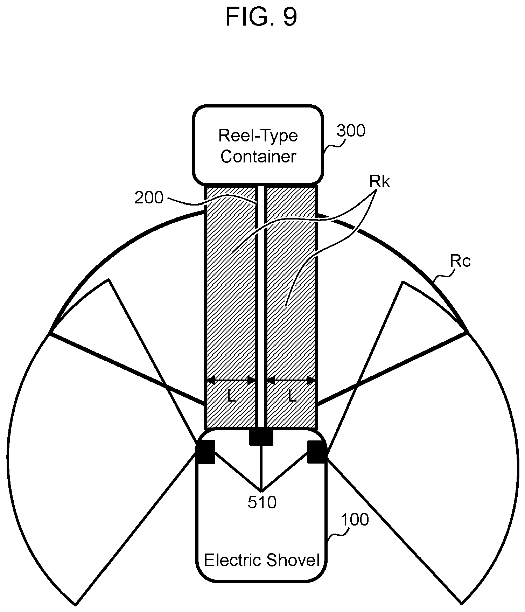

   Fig. 9 is a diagram illustrating a detection range set when a surrounding camera is used.
[Fig. 10]

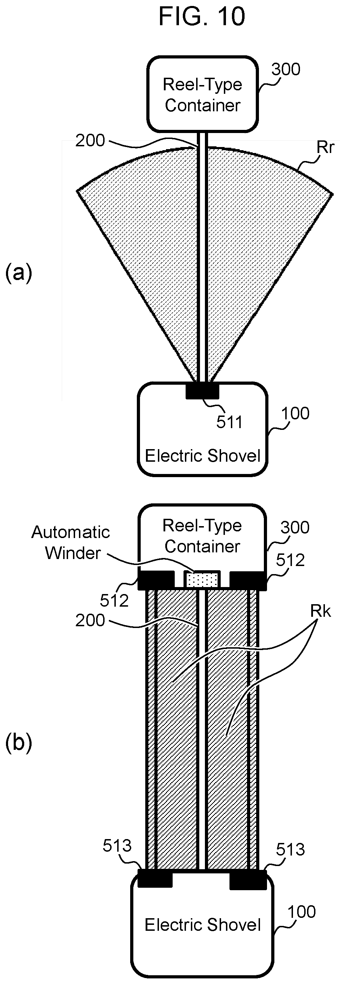

   Figs. 10(a) and 10(b) are diagrams illustrating another example of detecting means.

### [Description of Embodiments]

Hereinafter, with reference to the attached drawings, Embodiments of the present invention will be explained in detail.

### <Explanation of Entire Constitution of Work Site>

Fig. 1 is a diagram illustrating an entire constitution of a work site to which this Embodiment is applied.

At the work site, a plurality of working machines are operated. The illustrated work site is a construction site. And at the construction site, a case in which an electric shovel 100 as a working machine is operated is illustrated. It is to be noted that the working machine operated at the construction site is not limited to the electric shovel 100 but can be any construction machine such as a wheel loader, a bulldozer, a crane vehicle and the like. In addition, the working machine operated at the construction site may be a truck for transporting gravels. It is to be noted that the work site is not limited to the construction site. For example, it can be an agricultural work site in which an agricultural machine is operated as a working machine. In this case, the agricultural machines include tree fellers, bucking machines, tractors, in-forest working vehicles, yarders and the like.

The illustrated electric shovel 100 is an example of a working machine operated by electric power. Alternatively, the electric shovel 100 can be considered to be an example of an electric construction machine. To this electric shovel 100, a power cable 200 for supplying electric power to the electric shovel 100 is coupled. The power cable 200 is a high-voltage cable capable of transmitting three-phase alternating current, for example. The power cable 200 is coupled to the electric shovel 100 and the reel-type cable container 300 and supplies electric power to the electric shovel 100 via the reel-type cable container 300. That is, the power cable 200 has one end thereof coupled to the electric shovel 100 and the other end coupled to the reel-type cable container 300. The reel-type cable container 300 is an example of a cable container, winds the power cable 200, and stores the power cable 200 for a surplus length. Then, the reel-type cable container 300 makes the power cable 200 in a straight-line state by winding the power cable 200. That is, when the electric shovel 100 performs an operation of separating away from the reel-type cable container 300, the wound power cable 200 is pulled out of the reel-type cable container 300. In addition, when the electric shovel 100 performs an operation of approaching the reel-type cable container 300, the power cable 200 is wound in the reel-type cable container 300. The reel-type cable container 300 gives a tension for winding the power cable 200, whereby the power cable 200 maintains the straight-line state shape between the electric shovel 100 and the reel-type cable container 300.

To the reel-type cable container 300, electric power is supplied from a system power-source 400. The system power-source 400 is also called a commercial power-source, and electric power is generated by a power generator and supplied from a power company. Fig. 1 illustrates that the electric power is supplied from the system power-source 400 via a power board 410, a cable 420.

As described above, at the construction site, not only the electric shovel 100 but also the other working machines are operated. In addition to the working machines, workers also move in the construction site. Thus, there is a concern that the other working machines or workers enter a space between the electric shovel 100 and the reel-type cable container 300. In this case, there is a concern that the working machine or the worker is brought into contact with the power cable 200. And if another working machine is brought into contact with the power cable 200, the power cable 200 could be damaged or cut, which causes a concern of a fire or electric shock. In addition, the contact by the worker with the power cable 200 is dangerous for the worker.

Thus, in this Embodiment, an object detecting device for detecting an object such as a working machine, a worker and the like approaching the power cable 200 is provided. And when the object detecting device executes control of limiting the electric power to be supplied to the electric shovel 100 on an upstream side of the power cable 200, the above-described problem is avoided. In this Embodiment, the object detecting device is provided at either one of the electric shovel 100 and the reel-type cable container 300.

### <Explanation of Constitution of Power Control System 1>

Fig. 2 is a block diagram illustrating the power control system 1 when an object detecting device 500 is mounted on the electric shovel 100. In addition, Fig. 3 is a diagram illustrating exchange of information when the object detecting device 500 is mounted on the electric shovel 100.

In the power control system 1 shown in Fig. 2, it is illustrated that electric power is supplied from the system power-source 400 to the reel-type cable container 300, and the electric power is supplied by the power cable 200 from the reel-type cable container 300 to the electric shovel 100.

The electric shovel 100 includes a high-voltage circuit 110, a vehicle controller 120, a hydraulic circuit 130, an operation system 140, and the object detecting device 500.

The illustrated electric shovel 100 controls the electric power supplied from the power cable 200 by controlling the high-voltage circuit 110 by the vehicle controller 120 so as to cause a drive motor 118, which is a power source, to be driven.

The high-voltage circuit 110 includes an AC/DC converter 111 which converts the alternative-current power supplied from the power cable 200 to a direct current, a high-voltage storage battery 112, which is an example of a battery and stores electric power, a precharge relay 113 and a main relay 114 for controlling ON / OFF of the high-voltage circuit 110, a resistor 115, a capacitor 116, an inverter 117 for inverting the DC power to the AC for causing the drive motor 118 to be driven, and the drive motor 118.

When the high-voltage circuit 110 is to be turned ON, first, the precharge relay 113 is turned ON. As a result, electric charges are accumulated in the capacitor 116. Then, the main relay 114 is turned ON. As a result, generation of a rush current when the high-voltage circuit 110 is turned ON is avoided. In addition, generation of welding at a terminal of the high-voltage circuit 110 is avoided.

The high-voltage circuit 110 supplies electric power to the drive motor 118 by the electric power generated by the AC/DC converter 111 and the high-voltage storage battery 112. That is, when a load on the drive motor 118 is small, the drive motor 118 is driven by the electric power from the AC/DC converter 111. At this time, if the electric power supplied from the AC/DC converter 111 has allowance, the high-voltage storage battery 112 is charged. On the other hand, when the load of the drive motor 118 becomes larger, and the electric power from the AC/DC converter 111 runs short, the electric power for the shortage is supplied from the high-voltage storage battery 112.

The electric power supplied from the AC/DC converter 111 and the high-voltage storage battery 112 is rectified to a stable direct current by the capacitor 116 repeating charging and discharging. And the direct current is converted by the inverter 117 at an arbitrary frequency or voltage to an alternating current, and a rotation number of the drive motor 118 is controlled. As a result, a hydraulic amount generated by a hydraulic pump 131 is controlled, and the electric shovel 100 is operated.

The vehicle controller 120 includes a control-computation function part 121, a data recording part (memory) 122, and a communication function part 123.

The control-computation function part 121 performs calculation for controlling the AC/DC converter 111, the high-voltage storage battery 112, and the inverter 117. The AC/DC converter 111, the high-voltage storage battery 112, the inverter 117 include control parts (controllers) 111C, 112C, 117C, respectively. The control parts 111C, 112C, 117C transmit data indicating states of the AC/DC converter 111, the high-voltage storage battery 112, the inverter 117 to the control-computation function part 121. In the control-computation function part 121, calculation is performed on the basis of the transmitted data, and the control signals for controlling the AC/DC converter 111, the high-voltage storage battery 112, the inverter 117 are transmitted to the control parts 111C, 112C, 117C.

The data recording part (memory) 122 records program data for the control-computation function part 121 to perform the calculation.

The communication function part 123 is a communication interface used when a control signal is transmitted to the control parts 111C, 112C, 117C. In addition, the communication function part 123 receives object detection information, which is information transmitted when the object detecting device 500 detects an object. As shown in Fig. 3, when the object detection information is received, the control-computation function part 121 outputs a motor stop signal to the inverter 117. The inverter 117 further outputs a motor stop signal to the drive motor 118 and causes the hydraulic pump 131 to be stopped.

In addition, to the vehicle controller 120, a vehicle monitor 124 is coupled. On the vehicle monitor 124, a state of the electric shovel 100 can be displayed. In addition, the vehicle monitor 124 is a touch panel, for example, and an operator can input setting related to the electric shovel 100 or the like by the vehicle monitor 124.

The hydraulic circuit 130 includes the hydraulic pump 131 for generating a hydraulic pressure, a hydraulic-fluid tank 132 for storing hydraulic fluid, a first directional-control valve 133, and a second directional-control valve 134.

The hydraulic pump 131 is a variable-capacity type hydraulic pump driven by the drive motor 118. This hydraulic pump 131 sucks the hydraulic fluid from the hydraulic-fluid tank 132, supplies the hydraulic fluid to a swivel motor (not shown) of the electric shovel 100 and arm cylinders 14, 16, 17, respectively, via the first directional-control valve 133 and the second directional-control valve 134 and causes the electric shovel 100 to be operated.

The operation system 140 is provided in an operator's cabin of the electric shovel 100 and is used when the operator operates the electric shovel 100. As the operation system 140, a motor control dial (not shown) for setting a work-mode selection switch and a rotation number of the drive motor 118, operation levers 141A, 141B and the like are provided.

The operation levers 141A, 141B correspond to a swivel motor and an arm cylinder of each, and an electric lever which outputs an electric operation signal (lever signal Lv) corresponding to an operation amount is used, for example.

The object detecting device 500 includes a surrounding camera 510, an object detection computation-unit 520, a data transmission / reception part 530, and notification equipment 540.

The surrounding camera 510 is an example of a first detecting device for detecting an object in a periphery of the power cable 200. In addition, the surrounding camera 510 is an example of a second detecting device for detecting a position of the working machine and a position of the cable container. The surrounding camera 510 is a camera mounted on an upper part of the electric shovel 100 and photographing a periphery of the electric shovel 100, for example. The surrounding camera 510 is constituted by one unit of a camera, for example, and as shown in Fig. 3, a rear image of the electric shovel 100 is obtained. However, this is not limiting, and it may be constituted by a plurality of units in order to photograph a side-surface direction or the entire circumferential direction of the electric shovel 100.

The object detection computation-unit 520 extracts an object approaching the power cable 200 on the basis of the image photographed by the surrounding camera 510. This can be performed by using an existing image-processing art. And the object detection computation-unit 520 transmits object detection information to the reel-type cable container 300, when an object enters a detection range determined in advance. As a result, the reel-type cable container 300 limits electric power to be sent to the power cable 200, whereby the electric power to be supplied to the electric shovel 100 is limited. In actuality, in the reel-type cable container 300, it is preferable that the electric power to be sent to the power cable 200 is shut off, whereby the electric power to be supplied to the electric shovel 100 is shut off.

In this case, the object detection computation-unit 520 functions as a limiting device for limiting the electric power to be supplied to the electric shovel 100, when a distance between the object detected by the surrounding camera 510 and the power cable 200 falls within a range determined in advance.

The data transmission / reception part 530 is a communication interface used when the object detection information is to be transmitted from the object detection computation-unit 520 to the reel-type cable container 300. Here, a case in which the object detection information is transmitted to the reel-type cable container 300 by wireless communication is illustrated, but the object detection information may be transmitted by wired communication. In this case, by installing a communication cable which is accompanied by the power cable 200, for example, the object detection information can be transmitted by this communication cable. In addition, the object detection information can be transmitted by using the Power Line Communication (PLC). That is, the object detection information is transmitted by using the power cable 200.

The notification equipment 540 is equipment for giving notification when an object enters a detection range determined in advance. It can be also said such that the notification equipment 540 is an example of a notifying device for giving notification, and the object detection computation-unit 520 gives notification by the notification equipment 540, when the distance between the object detected by the surrounding camera 510 and the power cable 200 falls within a range determined in advance. As shown in Fig. 3, the notification equipment 540 gives notification, when it receives an alarm ON signal from the object detection computation-unit 520.

The notification equipment 540 can be an alarm lamp or a flash lamp, for example. In this case, notification is given by light. In addition, the notification equipment 540 can be a speaker or a buzzer, for example. In this case, the notification is given by sound such as a voice, an alarm sound or the like. The notification equipment 540 is installed in the electric shovel 100, for example. As a result, since the operator can hear it easily and can notice a dangerous situation easily, preparation such as taking a safe attitude or the like can be performed. In addition, among a plurality of working machines, to which working machine the power cable belongs can be known easily. However, the installation spot is not limited to the working machine such as the electric shovel 100 or the like but may be provided in the reel-type cable container 300 or the other spots in the work site.

Moreover, the notification equipment 540 can be a portable display terminal which displays that there is an object in the periphery of the power cable 200, for example. In this case, the notification information is displayed on the display of the terminal display device held by the worker, for example.

The reel-type cable container 300 includes a breaker 310, a power control computation-unit 320, and a data transmission / reception part 330.

The breaker 310 shuts down the electric power to be sent to the power cable 200, when object detection information is received from the object detecting device 500.

The power control computation-unit 320 sends a power limitation signal for shutting down the breaker 310 to the breaker 310 as shown in Fig. 3, when it receives the object detection information from the object detecting device 500.

The data transmission / reception part 330 is a communication interface performing exchange of data such as object detection information or the like with respect to the object detecting device 500.

In the Embodiment explained in Fig. 2, Fig. 3, such a case is illustrated that the object detecting device 500 is mounted on the electric shovel 100, but this is not limiting. For example, the object detecting device 500 may be mounted on the reel-type cable container 300.

Fig. 4 is a block diagram illustrating the power control system 1, when the object detecting device 500 is mounted on the reel-type cable container 300. In addition, Fig. 5 is a diagram illustrating exchange of information, when the object detecting device 500 is mounted on the reel-type cable container 300.

It is to be noted that, in the explanation of Fig. 4, Fig. 5 below, points which are different from Fig. 2 and Fig. 3 will be explained, while the other explanation will be omitted.

When the object detecting device 500 is mounted on the reel-type cable container 300, the data transmission / reception part 330 for receiving object detection information from the vehicle controller 120 becomes unnecessary. On the other hand, the object detection information from the object detecting device 500 needs to be transmitted to the electric shovel 100. In this case, a data transmission / reception part 125 coupled to the vehicle controller 120 of the electric shovel 100 is provided. And the object detection information is transmitted from the data transmission / reception part 530 of the object detecting device 500 toward the data transmission / reception part 125.

### <Explanation of Processing Executed by Power Control System 1>

Fig. 6A, Fig. 6B are flowcharts illustrating processing executed in the power control system 1. In addition, Fig. 7 is a sequence diagram illustrating operations and exchange of information of the surrounding camera 510, the vehicle controller 120, the power control computation-unit 320, the notification equipment 540.

First, an operator of the electric shovel 100 turns the key ON (S601). As a result, the high-voltage circuit 110 is turned ON, and the operator can operate the electric shovel 100.

Subsequently, the surrounding camera 510 of the object detecting device 500 starts object detection (S602). That is, the surrounding camera 510 starts photographing.

Subsequently, the object detection computation-unit 520 of the surrounding camera 510 takes in the image photographed by the surrounding camera 510 (S603) and executes image processing (S604, S701).

Then, the object detection computation-unit 520 detects a position of the power cable 200 (S605). A method of detecting the position of the power cable 200 will be described later.

Moreover, the object detection computation-unit 520 determines whether or not the position of the power cable 200 could be detected (S606).

As a result, if the position of the power cable 200 cannot be detected (No at S606), the object detection computation-unit 520 transmits cable-position undetectable to the vehicle controller 120 of the electric shovel 100 (S607).

Subsequently, the vehicle controller 120 notifies the operator that position confirmation of the power cable 200 will be performed (S608).

Then, the operator modifies the position of the power cable 200 or the vehicle-body position (S609). After that, the processing returns to S603.

On the other hand, if the position of the power cable 200 could be detected at S606 (Yes at S606), the object detection computation-unit 520 determines whether or not there is an object in a predetermined distance from the power cable 200 (S610). That is, the object detection computation-unit 520 determines whether or not the distance between the object detected by the surrounding camera 510 and the power cable 200 fell within the range determined in advance.

As a result, if there is no object within the predetermined distance (No at S610), the object detection computation-unit 520 turns OFF the notification function and turns OFF the alarm sound or alarm display of the notification equipment 540 (S611). After that, the processing returns to S603.

On the other hand, if there is an object within a predetermined distance (Yes at S610), the following processing is executed.

First, in the object detecting device 500, the object detection computation-unit 520 turns ON the notification function and turns ON the alarm sound or alarm display of the notification equipment 540 (S612, S703 to S704).

In addition, the object detection computation-unit 520 transmits object detection information to the vehicle controller 120 of the electric shovel 100 (S613, S702). In the electric shovel 100, the vehicle controller 120 receives the object detection information (S614, S702).

Moreover, the object detection computation-unit 520 transmits the object detection information to the power control computation-unit 320 of the reel-type cable container 300 (S615, S706 to S707). In the reel-type cable container 300, the power control computation-unit 320 receives the object detection information (S616, S707).

In the electric shovel 100, the vehicle controller 120 changes power supplying means (S617, S705). Specifically, the power supplying means is switched to the high-voltage storage battery 112 (battery drive).

In addition, in the reel-type cable container 300, the power control computation-unit 320 turns ON power limitation (S618, S708). As a result, the breaker 310 shut off the electric power to be sent to the power cable 200.

Then, in the electric shovel 100, the vehicle controller 120 turns ON the operation limitation of the electric shovel 100 and safely stops the electric shovel 100 (S619, S709).

Subsequently, the object detection computation-unit 520 determines whether or not there is an object within a predetermined distance from the power cable 200 (S620).

As a result, if there is an object within the predetermined distance (Yes at S620), the processing returns to S610.

On the other hand, if there is no object within the predetermined distance (No at S620), it is notified to the electric shovel 100 and the reel-type cable container 300. And in the reel-type cable container 300, the power control computation-unit 320 turns OFF power limitation (S621). As a result, the electric power to be sent to the power cable 200 is resumed. In addition, in the electric shovel 100, the vehicle controller 120 turns OFF the operation limitation of the electric shovel 100 (S622). As a result, he operation of the electric shovel 100 is resumed.

### <Method of Detecting Position of Power Cable 200>

At S610 in Fig. 6B, when it is determined whether or not there is an object within a predetermined distance from the power cable 200, as explained at S605, the position of the power cable 200 needs to be detected.

In this Embodiment, in order to detect the position of the power cable 200, the following methods are used, for example.

As a first method, the object detection computation-unit 520 estimates that a straight line which couples the position of the electric shovel 100 detected by the surrounding camera 510 to the position of the reel-type cable container 300 is a position of the power cable 200 and sets a range determined in advance on the basis of this position of the power cable 200.

Fig. 8 is a diagram illustrating a positional relation among the electric shovel l00, the reel-type cable container 300, and the power cable 200.

The reel-type cable container 300 is at a fixed position, while the electric shovel 100 moves to various positions depending on the contents of works. Here, it is illustrated that the electric shovel 100 moves to three positions. However, the power cable 200 is wound by the reel-type cable container 300 and holds the straight-line state shape between the electric shovel 100 and the reel-type cable container 300, regardless of the position of the electric shovel 100. Thus, when the object detection computation-unit 520 detects the positions of the electric shovel 100 and the reel-type cable container 300, the straight-line state power cable 200 is present between them. Thus, by estimating that the straight line coupling the position of the electric shovel 100 and the position of the reel-type cable container 300 to each other as the position of the power cable 200, the object detection computation-unit 520 can grasp the position of the power cable 200.

As a second method, to provide a detection material on an outer surface of the power cable 200 can be considered. The detection material is a fluorescent agent, for example. In addition, in order to provide the fluorescent agent, the fluorescent agent is applied to the power cable 200, for example. It is to be noted that the fluorescent agent does not have to be applied to the entire power cable 200 but may be applied to a part thereof.

And the object detection computation-unit 520 detects the fluorescent agent imaged by the surrounding camera 510 and sets the position of the fluorescent agent as the position of the power cable 200. Since the fluorescent agent emits color at a specific wavelength, the object detection computation-unit 520 sets the straight-line state one which emits color at this specific wavelength in the photographed images as the position of the power cable 200.

### <Method of Determining Whether or Not There is Object within Predetermined Distance from Power Cable 200>

At S610 in Fig. 6B, in order for the object detection computation-unit 520 to determine whether or not a distance between the object detected by the surrounding camera 510 and the power cable 200 is within a range determined in advance, the following method is used. That is, the object detection computation-unit 520 sets an area within a width determined in advance and clamping the straight-line state power cable 200 as the range determined in advance. That is, this range determined in advance is a predetermined width clamping the straight-line state power cable 200. This range is referred to as a detection range below in some cases.

Fig. 9 is a diagram illustrating a detection range Rk set when the surrounding camera 510 is used.

Here, three units of the surrounding cameras 510 are used, and images on the rear and in the side-surface direction of the electric shovel l00 are photographed. In this case, an angle of view of a photographing range Rc is 270°, for example. And between the electric shovel 100 and the reel-type cable container 300, the straight-line state power cable 200 is present. And it illustrates that the power cable 200 is clamped, and a range of a width L is set as the detection range Rk. This width L can be set to 4m, for example. It is to be noted that, by setting this width L as a length determined in advance on the image, whether or not the distance between the object and the power cable 200 is within a range determined in advance can be determined on whether or not an object has entered the detection range Rk determined by the width L. Thus, the object detection computation-unit 520 does not have to specifically calculate the distance between the object and the power cable 200.

In the above-described example, the surrounding camera 510 is used as detecting means for detecting an object approaching the power cable 200, but this is not limiting.

Figs. 10(a) and 10(b) are diagrams illustrating other examples of the detecting means.

Among them, Fig. 10(a) is a diagram illustrating a case in which a laser scanner such as a LiDAR (Light Detection and Ranging) 511 or the like is used.

The LiDAR 511 measures a three-dimensional shape by scanning a surface of an object or the like approaching the power cable 200. The LiDAR is an device for measuring a distance to a target by irradiating a target with a laser and by receiving reflection thereof. From the principle thereof, accuracy of the distance measurement is relatively as high as several mm to several cm. The LiDAR has one straight-going laser as a basic unit and grasps the surface shape of a target as a collection of fine points (point group) by periodically changing a direction of irradiation continuously at a speed as high as several tens Hz. In this case, obtained information is data expressing the three-dimensional shape of an object or the like as point groups. And by means of the position of the point group, whether or not there is an object within a predetermined distance from the power cable 200 can be determined. It is to be noted that, according to the LiDAR 511, the position of the power cable 200 can be also detected.

Here, a laser irradiation range Rr of the LiDAR 511 is illustrated. And an area clamping the power cable 200 and within a width determined in advance is assumed to be a detection range.

Fig. 10(b) is a diagram illustrating a case in which a transmission-type infrared sensor is used.

Here, a light projector 512 for emitting the infrared light is installed on the reel-type cable container 300. And a light receiver 513 for receiving the infrared light is installed on the electric shovel 100. And a range of a width in which the light projector 512 and the light receiver 513 are installed shall be a detection range Rk. When an object interrupts the infrared light, which is not detected by the light receiver any more, it can be determined that an object has entered into the detection range Rk.

### <Explanation of Operation Limitation of Electric Shovel 100>

At S619 in Fig. 6B, the vehicle controller 120 executes operation limitation of the electric shovel 100.

In this Embodiment, when the electric power supplied to the electric shovel 100 by the power cable 200 is limited, the vehicle controller 120 causes the electric shovel 100 to be operated. In this case, the electric shovel 100 can be operated by electric power supplied from the high-voltage storage battery 112. In a case where there is no high-voltage storage battery 112, when the electric power supplied from the power cable 200 is shut down, the electric shovel 100 stops suddenly. In this case, depending on the operation state of the electric shovel 100, a balance is lost due to inertia of an arm or the like, for example, and there is a concern that the electric shovel 100 falls down. Thus, in this Embodiment, even if the electric power to be supplied to the electric shovel 100 by the power cable 200 is limited, the operation is made possible by the electric power supplied from the high-voltage storage battery 112, whereby occurrence of such an event is prevented. On the other hand, when the electric shovel 100 is operated without any limitation, there is a concern that an arm or the like is brought into contact with an approaching object. Thus, in this Embodiment, when the electric power supplied to the electric shovel 100 by the power cable 200 is limited, the vehicle controller 120 executes operation limitation control for limiting the operation of the electric shovel 100.

Specifically, the operation limitation control is such control that an operation of the electric shovel 100 is limited within a range determined in advance. More specifically, it is such control that limits a driving operation of a working device made of a boom, an arm, a bucket and the like, a turning operation of the electric shovel 100, a traveling operation of the electric shovel 100. That is, the vehicle controller 120 limits the operation range so that the arm or the like does not touch the approaching object.

In addition, the operation limitation control is such control that the operation of the electric shovel 100 is gradually slowed and then stopped. That is, the vehicle controller 120 stops the electric shovel 100 but it gently stops the electric shovel 100 so that the power cable 200, the arm or the like does not touch an approaching object. As a result, such an event that the balance is lost due to inertia of the arm or the like, and the electric shovel l00 falls down can be prevented. In addition, such an event that the electric shovel 100 itself damages or cuts down the power cable 200 can be prevented.

It is to be noted that, in the above-described Embodiment, such a case that an object other than the device itself approaching the power cable 200 has been explained, but this is not limiting, but it is also applied to such a case that the device itself approaches the power cable 200. For example, such a case that an arm or the like of the electric shovel 100 approaches the power cable 200 can be assumed.

In addition, in the above-described Embodiment, the surrounding camera 510 is the second detecting device, but this is not limiting. For example, the second detecting device may be another camera provided in a work site, instead of a camera which detects an object in the periphery of the power cable 200. In addition, the second detecting device, for example, may be constituted such that the electric shovel 100 or the reel-type cable container 300 includes a position transmitter such as a GNSS (Global Navigation Satellite System) antenna, whereby a position receiver obtains position information. In this case, too, similarly to the case where the surrounding camera 510 is the second detecting device, by estimating that the straight line which connects the position of the electric shovel 100 and the position of the reel-type cable container 300 is the position of the power cable 200, the object detection computation-unit 520 can grasp the position of the power cable 200.

### <Explanation of Power Control Method>

The processing executed by the object detecting device 500 in this Embodiment having been explained so far is realized by cooperation of software and hardware resources. That is, a processor such as a CPU (Central Processing Unit) or the like, not shown, provided in the object detecting device 500 loads the program for realizing each function of the object detecting device 500 in the memory and executes it, whereby each function performed by the object detecting device 500 is realized.

Thus, the processing executed by the above-described object detecting device 500 can be grasped as a power control method in which, by a processor's execution of a program recorded in a memory, an object in a periphery of a power cable for supplying electric power to a working machine operated by electric power is detected, and when a distance between the detected object and the power cable is brought into a range determined in advance, the electric power to be supplied to the working machine is limited.

It is to be noted that the program which realizes this Embodiment can be provided not only by the communication means but also by being stored in a recording medium, such as a CD-ROM and the like.

This Embodiment has been explained, but the technical range of the present invention is not limited to the range described in the above-described Embodiment. It is obvious from the description in the claims that those obtained by changing or improving the above-described Embodiments in various ways are also included in the technical range of the present invention.

### [Reference Signs List]

- 1: Power control system
- 100: Electric shovel (working machine)
- 110: High-voltage circuit
- 111: AC/DC converter
- 112: High-voltage storage battery (battery)
- 120: Vehicle controller
- 121: Control-computation function part
- 130: Hydraulic circuit
- 200: Power cable
- 300: Reel-type cable container (cable container)
- 310: Breaker
- 320: Power control computation-unit
- 400: System power-source
- 500: Object detecting device
- 510: Surrounding camera (first detecting device, second detecting device)
- 520: Object detection computation-unit (controller)
- 540: Notification equipment (notifying device)
- Rk: Detection range

## Claims

1. A power control system, comprising:
a first detecting device for detecting an object in a periphery of a power cable which supplies, to a working machine operated by electric power, the electric power; and
a controller for limiting the electric power to be supplied to the working machine, when a distance between the object detected by the first detecting device and the power cable falls within a range determined in advance.

2. The power control system according to claim 1, wherein
the power cable is coupled to the working machine and a cable container which brings the power cable into a straight-line state by winding the power cable and supplies electric power to the working machine via the cable container.

3. The power control system according to claim 2, wherein
the range determined in advance is a predetermined width clamping the power cable in the straight-line state.

4. The power control system according to claim 3, further comprising:
a second detecting device for detecting a position of the working machine and a position of the cable container, wherein
the controller estimates a straight line, connecting a position of the working machine and a position of the cable container, which are detected by the second detecting device, as a position of the power cable; and the range determined in advance is set on the basis of this position of the power cable.

5. The power control system according to claim 3, wherein
the first detecting device is a camera disposed capable of imaging the power cable, wherein
the power cable includes on an outer surface thereof a detection material; and
the controller sets the position of the detection material imaged by the camera as a position of the power cable.

6. The power control system according to claim 1, further comprising a vehicle controller mounted on the working machine and operating, when electric power to be supplied to the working machine by the power cable is limited, the working machine by electric power supplied from a battery provided in the working machine.

7. The power control system according to claim 1, further comprising a vehicle controller mounted on the working machine and executing, when electric power to be supplied to the working machine by the power cable is limited, operation limitation control for limiting an operation of the working machine.

8. The power control system according to claim 7, wherein the operation limitation control is control for limiting an operation of the working machine within the range determined in advance.

9. The power control system according to claim 7, wherein the operation limitation control gradually slows the operation of the working machine and stops the same.

10. The power control system according to claim 1, further comprising:
a notifying device for giving notification, wherein
when the distance between the object detected by the first detecting device and the power cable falls within the range determined in advance, the controller implements notification by the notifying device.

11. The power control system according to claim 10, wherein
the notifying device gives notification by at least one of light and sound.

12. The power control system according to claim 10, wherein
the notifying device is a mobile display terminal which displays to the effect that there is the object in a periphery of the power cable.

13. A power control method comprising, by a processor executing a program recorded in a memory, detecting an object in a periphery of a power cable which supplies, to a working machine operated by electric power, the electric power; and
limiting, when a distance between the detected object and the power cable falls within a range determined in advance, the electric power to be supplied to the working machine.
